# EUROPÄISCHE PATENTSCHRIFT

(11) **EP 1 507 113 B1**
(45) Veröffentlichungstag und Bekanntmachung des Hinweises auf die Patenterteilung: **14.11.2007**
(21) Anmeldenummer: 04018520.9
(22) Anmeldetag: 05.08.2004
(51) Int. Cl.: F16M 11/06

(54) **Stativkopf**
Tripod head
Tête de trépied

(30) Priorität: 14.08.2003 AT 12792003
(43) Veröffentlichungstag der Anmeldung: 16.02.2005
(73) Patentinhaber: Swarovski-Optik KG, 6060 Absam (AT)
(72) Erfinder: Mayr, Werner, 6060 Hall (AT)
(74) Vertreter: Torggler, Paul Norbert

(56) Entgegenhaltungen:
- FR-A- 420 644
- GB-A- 1 041 794
- GB-A- 1 243 415
- US-A- 2 998 953
- US-A- 3 353 776
- US-A- 3 712 571
- US-A- 4 301 896
- US-A- 5 092 433

## Beschreibung

Die vorliegende Erfindung betrifft einen Stativkopf mit mindestens einem Schwenk- oder Kippgelenk, wobei dieses einen in einer im Wesentlichen zylinderförmigen Ausnehmung gelagerten Kolben und eine Einrichtung mit mindestens einem federbelasteten Klemmelement zum wieder lösbaren Arretieren des Kolbens in der zylinderförmigen Ausnehmung aufweist und der Kolben und die zylinderförmige Ausnehmung in entarretierter Stellung des Klemmelements relativ zueinander drehbar sind.

Stativköpfe sind z.B. aus der US 3,712,571 bekannt. Häufig werden sie dazu eingesetzt, ein Fernrohr, eine Kamera, ein Vermessungsgerät od. dgl. auf einem Dreibein oder auf anderen Unterlagen, vorzugsweise schwenk- und kippbar, zu befestigen. Um das einmal ausgerichtete, darauf befestigte Gerät in seiner Position fixieren zu können, weisen die Gelenke bzw. zumindest eines der Gelenke Arretiereinrichtungen auf. In der US 3,712,571 sieht die Arretiereinrichtung mehrere Klemmelemente vor, die durch Einschrauben einer Verschlussschraube in den Kolben aus diesem herausgefahren und gegen die Innenwandung der zylinderförmigen Ausnehmung, in der der Kolben geführt ist, gepresst werden. Die in der genannten Schrift gezeigte Einrichtung zum Arretieren des Kolbens in der zylinderförmigen Ausnehmung hat zum einen den Nachteil, dass eine Schraube aufwendig ein- und ausgeschraubt werden muss. Zum anderen sieht der Arretiermechanismus im Kolben mehrere gegeneinander gelagerte Kugeln vor. Diese Anordnung ist relativ aufwendig und wartungsanfällig.

Aus der US 2,998,953 sind Stativköpfe mit federbelasteten Klemmelementen bekannt. Zur Federbelastung dient hier eine zwischen zwei Klemmelementen verspannte Schraubenfeder. Hierdurch ergibt sich zwar eine einfachere Konstruktion. Die Praxis hat jedoch gezeigt, dass es, vor allem wenn schwere Kameras, Ferngläser oder dergleichen auf den Stativkopf montiert werden sollen, günstig ist, die Haltekraft im arretierten Zustand weiter zu verbessern, um ein ungewünschtes Verkippen oder Verschwenken nach dem Einstellen und Arretieren eines Kipp- oder Schwenkwinkels zu vermeiden. Ferner ist ein Stativkopf gemäß dem Oberbegriff des Anspruchs 1 aus der US 4,301,896 bekannt.

Aufgabe der Erfindung ist es daher, einen gattungsgemäßen Stativkopf zu schaffen, der ein einfaches Arretieren und Entarretieren zumindest eines Schwenk- oder Kippgelenkes in konstruktiv einfacher, aber zuverlässiger Weise ermöglicht.

Dies wird erfindungsgemäß dadurch erreicht, dass zur Federbelastung des Klemmelementes ein elastisches Band od. dgl. die äußere Mantelfläche des Kolbens zumindest bereichsweise umgibt.

Die erfindungsgemäße Federbelastung kann sowohl in Richtung der Arretierung als auch in Richtung der Entarretierung vorgesehen sein. Sie ermöglicht in jedem Fall ein schnelles und präzises Öffnen und Schließen der Arretiereinrichtung, wobei gleichzeitig eine besonders einfache Konstruktion zur Verfügung gestellt werden kann. Das elastische Band wirkt hierbei nicht nur als Federbelastung des Klemmelementes, sondern kann gleichzeitig dazu verwendet werden, die Reibung zwischen Klemmelement und zylinderförmiger Ausnehmung im arretierten Zustand in der Weise zu erhöhen, dass der auf dem Stativkopf aufgesetzte Apparat, z.B. das Fernglas oder Vermessungsgerät, sicher in seiner arretierten Position gehalten wird. Vorzugsweise ist das elastische Band über eine Öffnung der Ausnehmung gespannt.

Die Gegenkraft zum federbelasteten Klemmelement kann in unterschiedlicher Weise aufgebracht werden. Gemäß eines weiteren Aspektes der vorliegenden Erfindung ist hierzu vorgesehen, dass zum Ausfahren oder Einfahren der Klemmelemente mindestens ein, vorzugsweise von Hand betätigbarer, Exzenter vorgesehen ist.

Ein weiterer Aspekt der Erfindung sieht zur sicheren Fixierung des einmal eingestellten Drehoder Kippwinkels des Stativkopfes vor, dass Zähne oder eine andersgeartete Oberfläche mit erhöhter Reibung zumindest bereichsweise an der Außenfläche des Klemmelementes und/oder an der dem Klemmelement gegenüberliegenden Oberfläche der zylinderförmigen Ausnehmung oder des Kolbens angeordnet sind (ist). Durch die in der Arretierstellung ineinander greifenden Zähne wird eine besonders feste Arretierung erreicht. Diese kann zusätzlich zu der durch das elastische Band erhöhten Reibung vorgesehen sein.

Um ein Verschieben der einmal eingestellten Position beim Schließen der Arretiereinrichtung und dem damit verbundenen Aufeinanderpressen der Zähne zu verhindern, sieht eine besonders günstige Ausführungsvariante vor, dass die Zähne an der Außenfläche des Klemmelementes und die Zähne an der gegenüberliegenden Oberfläche der zylinderförmigen Ausnehmung oder des Kolbens eine unterschiedliche Zahnteilung aufweisen.

Weitere Einzelheiten und Merkmale der vorliegenden Erfindung ergeben sich aus der nachfolgenden Figurenbeschreibung. Dabei zeigt:
- Fig. 1: eine schematische Darstellung eines erfindungsgemäßen Stativkopfes mit einem Dreibein und einem Fernrohr,
- Fig. 2: eine Seitenansicht auf den Aufbau gemäß Fig. 1 aus einer um 90 Grad gedrehten Position,
- Fig. 3a und 4a: Schnitte durch das Kippgelenk des erfindungsgemäßen Ausführungsbeispiels entlang der Linie A-A aus Fig. 2 und
- Fig. 3b und 4b: jeweils einen Schnitt entlang der Linie B-B aus Fig. 2.

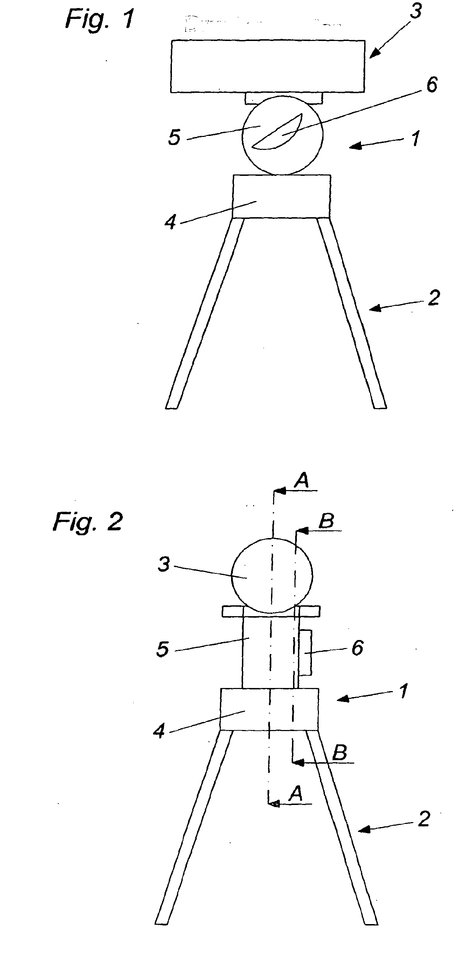

Der in Fig. 1 schematisch dargestellte Stativkopf 1 ist auf einem Dreibein 2 gelagert und trägt selbst ein Fernrohr 3 od. dgl. Zum Drehen des Fernrohres 3 um eine vertikale Achse ist, wie an sich bekannt, ein Schwenkgelenk 4 vorgesehen. Auf diesem auflagernd sieht der Stativkopf 1 ein Kippgelenk 5 vor, mit dem das Fernrohr um eine horizontal liegende Achse gekippt werden kann. Schematisch angedeutet ist des Weiteren der Arretierhebel 6, mit dem die Arretiereinrichtung von Hand betätigt und ein gewünschter Kippwinkel des Kippgelenkes 5 fixiert werden kann. Nicht dargestellt ist ein entsprechender Arretierhebel für das Schwenkgelenk 4. Die anhand der weiteren Figuren erläuterte Arretiereinrichtung kann aber ohne weiteres auch im Schwenkgelenk 4 zum Einsatz kommen.

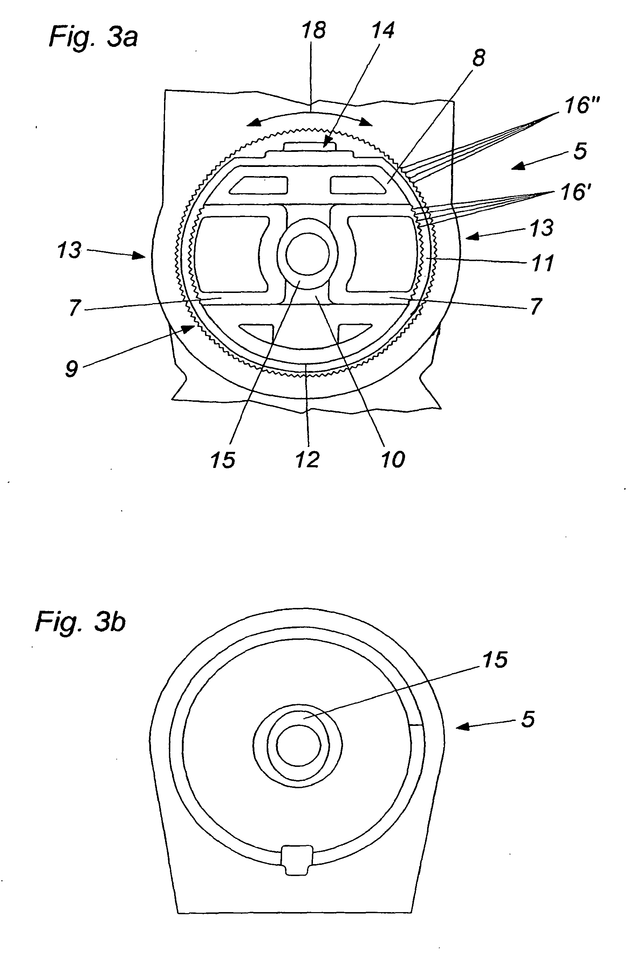

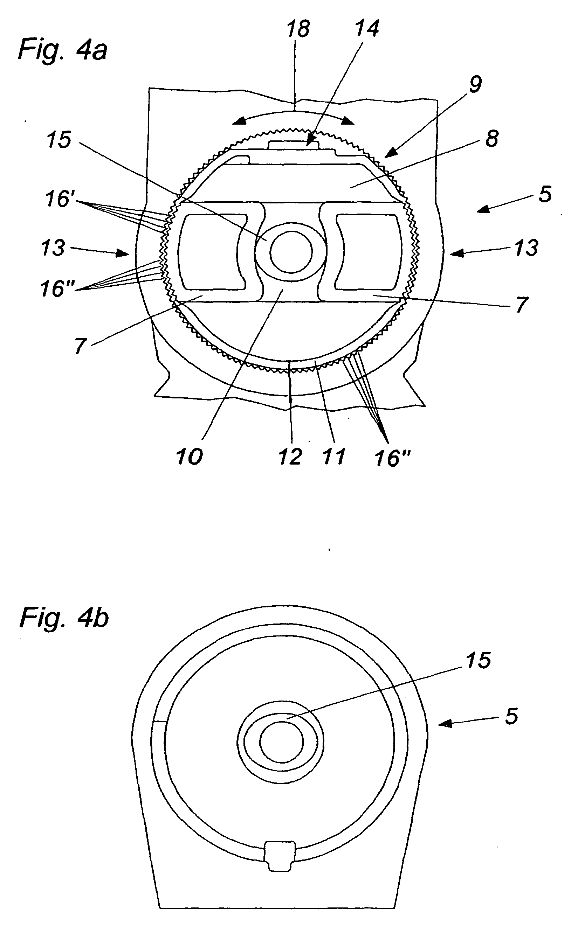

Fig. 2 zeigt eine Seitenansicht auf das in Fig. 1 schematisch dargestellte Ausführungsbeispiel, wobei die Schnittlinien A-A und B-B eingezeichnet sind. Die Fig. 3a und 4a zeigen ein bevorzugtes Ausführungsbeispiel in einer Detailansicht im Schnitt entlang der Linie A-A, wobei nur der Bereich des Kippgelenkes 5 dargestellt und sowohl das Fernrohr 3 als auch das Schwenkgelenk 4 weggelassen sind. Fig. 3a zeigt die erfindungsgemäß ausgeprägte Arretiereinrichtung im entarretierten Zustand, in dem das Kippgelenk um eine horizontale Achse in einer der Richtungen des Doppelpfeiles 18 gedreht werden kann. Fig. 4a zeigt dasselbe Kippgelenk 5 in der Arretierstellung, in der ein vorher gewählter Kippwinkel fixiert ist. Das dargestellte Kippgelenk weist einen in der zylinderförmigen Ausnehmung 9 angeordneten Kolben 8 auf. In diesem ist eine Ausnehmung 10 vorgesehen, in der die beiden Klemmelemente 7 geführt sind. Die Klemmelemente 7 sind zum wiederlösbaren Verspannen in der gezeigten Ausführungsvariante paarweise gegenüberliegend angeordnet. Um die Klemmelemente 7 und die äußere Mantelfläche 12 des Kolbens 8 herum ist ein elastisches Band 11 zur Federbelastung der Klemmelemente 7 angeordnet. Im gezeigten Ausführungsbeispiel umfasst es die gesamte äußere Mantelfläche 12 des Kolbens 8 in Form eines geschlossenen Rings, welcher mit einer Schraube 14, Niete od. dgl. an zumindest einer Stelle am Kolben 8 fixiert ist. Dies ist eine besonders einfache, aber präzis wirkende Konstruktion. Alternativ kann natürlich auch vorgesehen sein, dass das elastische Band im Wesentlichen nur über die Öffnungen 13 der Ausnehmung 10 gespannt ist. Die Gegenkraft zum elastischen Band 11 wird über den Arretierhebel 6 und den damit drehfest verbundenen Exzenter (Nocke) 15 auf die Klemmelemente 7 übertragen. Zum Arretieren des Kolbens 8 in der zylinderförmigen Ausnehmung 9 wird der Exzenter 15 in die in Fig. 4a gezeigte Position gedreht. Hierdurch werden die Klemmelemente 7 gegen die Innenwandung der zylinderförmigen Ausnehmung 9 gepresst, wodurch das dargestellte Kippgelenk 5 in seiner Lage fixiert ist. In dieser Stellung wird das elastische Band 11 von den Zähnen 16' der Klemmelemente 7 in die Verzahnung 16" der zylinderförmigen Ausnehmung gepresst. Sowohl durch das Vorsehen der Zähne 16 und 16' als auch durch das Einpressen des eine erhöhte Reibung aufweisenden elastischen Bandes entsteht hierbei eine besonders feste Arretierung.

Zur Entarretierung wird der Exzenter 15 mittels des Arretierhebels 6 in die in Fig. 3a gezeigte Position zurückgedreht. Das elastische Band 11 schiebt hierbei die Klemmelemente 7 zurück in die Ausnehmung 10, wodurch der Kolben freigegeben wird und das Kippgelenk 5 in eine andere Position gekippt werden kann. Der Exzenter 15 und die durch das elastische Band 11 hervorgerufene Federbelastung der Klemmelemente 7 bilden somit zusammen ein sich entgegenwirkendes Kräftepaar.

Um zu verhindern, dass beim Aufeinanderpressen der am Klemmelement 7 vorgesehenen Zähne 16' und der in der zylinderförmigen Ausnehmung 9 vorgesehenen Zähne 16" ein geringfügiges Verschieben des Kippwinkels auftritt, ist in der gezeigten Ausführungsvariante vorgesehen, dass die Zähne 16' und die Zähne 16" eine unterschiedliche Zahnteilung vorsehen. Dies bedeutet, dass die Zähne 16' eine andere Größe und/oder Breite als die Zähne 16" aufweisen.

Fig. 3b und 4b zeigen die in den Fig. 3a und 4a gezeigten Positionen des Exzenters in einer geschnittenen Ansicht entlang der Schnittlinie B-B aus Fig. 2. Der hier nicht dargestellte Arretierhebel 6 sitzt auf dem Exzenter 15 fest auf.

Bei der Ausbildung des Exzenters sieht ein besonders günstiges Detail vor, dass der Exzenter zwischen der in Fig. 3a gezeigten Öffnungsstellung und der in Fig. 4a gezeigten Arretierstellung um mehr als 90 Grad gedreht wird. Hierdurch wird eine über den Totpunkt hinweggeschwenkte Lage erreicht, womit der Exzenter 15 von alleine in dieser Position hält. Für den Exzenter kann ein Anschlag vorgesehen sein. Ein so ausgebildeter Exzenter 15 ist besonders schnell betätigbar, wobei nur geringe Stellkräfte aufgebracht werden müssen und ein hoher Verstellweg der Klemmelemente erreicht wird.

In den gezeigten Ausführungsbeispielen sind die Klemmelemente 7 in Ausnehmungen 10 im Kolben 8 geführt. Sie werden zum Arretieren radial nach außen gegen die zylinderförmige Ausnehmung 9 gepresst. Die Erfindung kann jedoch auch entgegengesetzt ausgebildet sein, sodass die Klemmelemente 7 von der zylinderförmigen Ausnehmung 9 ausgehend gegen den Kolben 8 gepresst werden. Hierbei ist nicht zwingend eine radiale Bewegungsrichtung der Klemmelemente 7 erforderlich. Auch die Wirkrichtung der Federbelastung auf die Klemmelemente 7 kann entgegengesetzt ausgeführt sein, sodass die Federbelastung zu einer Bewegung der Klemmelemente in Richtung der Arretierstellung führt und zum Öffnen ein geeigneter Exzenter 15 oder eine andere vorzugsweise von Hand betätigbare Mechanik vorgesehen ist. Ob die zylinderförmige Ausnehmung oder der Kolben mit dem Unterbau 2 drehfest verbunden ist, ist nicht wesentlich. Beides ist möglich, solange Kolben und zylinderförmige Ausnehmung relativ zueinander verdrehbar sind. Insgesamt ist die Erfindung somit nicht auf die dargestellten Ausführungsbeispiele beschränkt.

## Patentansprüche

1. Stativkopf (1) mit mindestens einem Schwenk- oder Kippgelenk (5), wobei dieses einen in einer im Wesentlichen zylinderförmigen Ausnehmung (9) gelagerten Kolben (8) und eine Einrichtung mit mindestens einem federbelasteten Klemmelement (7) zum wieder lösbaren Arretieren des Kolbens (8) in der zylinderförmigen Ausnehmung (9) aufweist und der Kolben (8) und die zylinderförmige Ausnehmung (9) in entarretierter Stellung des Klemmelements (7) relativ zueinander drehbar sind, wobei zur Federbelastung des Klemmelementes (7) ein elastisches Band (11) die äußere Mantelfläche (12) des Kolbens (8) zumindest bereichsweise umgibt, **dadurch gekennzeichnet, dass** das bzw. die Klemmelemente (7) innerhalb des elastischen Bandes (11) angeordnet ist/sind.

2. Stativkopf nach Anspruch 1, **dadurch gekennzeichnet, dass** das Klemmelement (7) in einer im Kolben (8) angeordneten Ausnehmung (10) geführt ist.

3. Stativkopf nach Anspruch 2, **dadurch gekennzeichnet, dass** das elastische Band (11) zumindest teilweise über eine Öffnung (13) der Ausnehmung (10) gespannt ist.

4. Stativkopf nach einem der Ansprüche 1 bis 3, **dadurch gekennzeichnet, dass** das elastische Band (11) einen geschlossenen Ring um die äußere Mantelfläche (12) des Kolbens (8) bildet.

5. Stativkopf nach einem der Ansprüche 1 bis 4, **dadurch gekennzeichnet, dass** das elastische Band mit einer Schraube (14). Niete od. dgl. an zumindest einer Stelle am Kolben (8) fixiert ist.

6. Stativkopf nach einem der Ansprüche 2 bis 5, **dadurch gekennzeichnet, dass** das in einer Ausnehmung (10) im Kolben (8) geführte Klemmelement (7) zum Arretieren radial nach außen gegen die zylinderförmige Ausnehmung (9) pressbar ist.

7. Stativkopf nach einem der Ansprüche 1 bis 6, **dadurch gekennzeichnet, dass** zum Ausfahren oder Einfahren der Klemmelemente (7) mindestens ein, vorzugsweise von Hand betätigbarer, Exzenter (15) vorgesehen ist.

8. Stativkopf nach Anspruch 7, **dadurch gekennzeichnet, dass** der Exzenter (15) der Federbelastung des Klemmelementes (7) entgegenwirkt.

9. Stativkopf nach einem der Ansprüche 1 bis 8, **dadurch gekennzeichnet, dass** die Einrichtung zum wiederlösbaren Verspannen mindestens zwei, vorzugsweise paarweise gegenüberliegend angeordnete, Klemmelemente (7) aufweist.

10. Stativkopf nach einem der Ansprüche 1 bis 9, **dadurch gekennzeichnet, dass** Zähne (16', 16") oder eine andersgeartete Oberfläche mit erhöhter Reibung zumindest bereichsweise an der Außenfläche des Klemmelementes (7) und/oder an der dem Klemmelement (7) gegenüberliegenden Oberfläche der zylinderförmigen Ausnehmung (9) oder des Kolbens angeordnet sind (ist).

11. Stativkopf nach Anspruch 10, **dadurch gekennzeichnet, dass** die Zähne (16') an der Außenfläche des Klemmelementes (7) und die Zähne (16") an der gegenüberliegenden Oberfläche der zylinderförmigen Ausnehmung (9) oder des Kolbens (8) eine unterschiedliche Zahnteilung aufweisen.

## Claims

1. A tripod head (4) having at least one pivoting or tilting joint (5), wherein same has a piston (8) mounted in a substantially cylindrical opening (9) and a device with at least one spring-loaded clamping element (7) for re-releasably arresting the piston (8) in the cylindrical opening (9) and the piston (8) and the cylindrical opening (9) are rotatable relative to each other in the released position of the clamping element (7), wherein to provide the spring loading of the clamping element (7) an elastic band (11) at least region-wise surrounds the outer peripheral surface (12) of the piston (8), **characterised in that** the clamping element or elements (7) is or are arranged within the elastic band (11).

2. A tripod head according to claim 1 **characterised in that** the clamping element (7) is guided in an opening (10) arranged in the piston (8).

3. A tripod head according to claim 2 **characterised in that** the elastic band (11) is at least partially tensioned over an orifice (13) of the opening (10).

4. A tripod head according to one of claims 1 to 3 **characterised in that** the elastic band (11) forms a closed ring around the outer peripheral surface (12) of the piston (8).

5. A tripod head according to one of claims 1 to 4 **characterised in that** the elastic band is fixed with a screw (14), rivets or the like at at least one location on the piston (8).

6. A tripod head according to one of claims 2 to 5 **characterised in that** the clamping element (7) guided in an opening (10) in the piston (8) can be pressed radially outwardly against the cylindrical opening (9) for the arresting action.

7. A tripod head according to one of claims I to 6 **characterised in that** there is provided at least one eccentric (15) which is preferably actuable by hand for extending or retracting the clamping elements (7).

8. A tripod head according to claim 7 **characterised in that** the eccentric (15) acts against the spring loading of the clamping element (7).

9. A tripod head according to one of claims 1 to 8 **characterised in that** the device for the re-releasably bracing action has at least two clamping elements (7) which are preferably arranged in paired opposite relationship.

10. A tripod head according to one of claims I to 9 **characterised in that** teeth (16', 16") or a surface of another kind with increased friction are or is arranged at least region-wise at the outside face of the clamping element (7) or at the surface, which is in opposite relationship to the clamping element (7), of the cylindrical opening (9) or of the piston.

11. A tripod head according to claim 10 **characterised in that** the teeth (16') at the outside face of the clamping element (7) and the teeth (16") at the oppositely disposed surface of the cylindrical opening (9) or the piston (8) involve a different tooth pitch.

## Revendications

1. Tête de trépied (1) comprenant au moins une articulation pivotante ou basculante (5), cette articulation présentant un piston (8) fixé dans un évidement (9) de forme sensiblement cylindrique et un dispositif avec au moins un élément de serrage (7) sollicité par ressort pour le blocage à nouveau amovible du piston (8) dans l'évidement (9) cylindrique et le piston (8) et l'évidement (9) cylindrique pouvant tourner l'un par rapport à l'autre dans la position débloquée de l'élément de serrage (7), une bande (11) élastique entourant au moins par endroits la surface d'enveloppe (12) extérieure du piston (8) pour la sollicitation par ressort de l'élément de serrage (7), **caractérisée en ce que** le ou les élément(s) de serrage (7) est/sont disposé (s) à l'intérieur de la bande (11) élastique.

2. Tête de trépied selon la revendication 1, **caractérisée en ce que** l'élément de serrage (7) est guidé dans un évidement (10) disposé dans le piston (8).

3. Tête de trépied selon la revendication 2, **caractérisée en ce que** la bande (11) élastique est étendue au moins en partie sur une ouverture (13) de l'évidement (10).

4. Tête de trépied selon l'une quelconque des revendications 1 à 3, **caractérisée en ce que** la bande (11) élastique forme une bague fermée autour de la surface d'enveloppe (12) extérieure du piston (8).

5. Tête de trépied selon l'une quelconque des revendications 1 à 4, **caractérisée en ce que** la bande élastique est fixée avec une vis (14), un rivet ou similaire en au moins un endroit sur le piston (8).

6. Tête de trépied selon l'une quelconque des revendications 2 à 5, **caractérisée en ce que** l'élément de serrage (7) guidé par un évidement (10) dans le piston (8) peut être comprimé radialement vers l'extérieur contre l'évidement (9) cylindrique pour le serrage.

7. Tête de trépied selon l'une quelconque des revendications 1 à 6, **caractérisée en ce qu'**au moins un excentrique (15), de préférence actionnable manuellement, est prévu pour la sortie ou l'entrée de l'élément de serrage (7).

8. Tête de trépied selon la revendication 7, **caractérisée en ce que** l'excentrique (15) agit dans le sens contraire à la sollicitation par ressort de l'élément de serrage (7).

9. Tête de trépied selon l'une quelconque des revendications 1 à 8, **caractérisée en ce que** le dispositif pour la tension amovible présente au moins deux éléments de serrage (7) de préférence disposés l'un en face de l'autre par paires.

10. Tête de trépied selon l'une quelconque des revendications 1 à 9, **caractérisée en ce que** des dents (16', 16'') ou une surface d'un autre type sont disposées avec un frottement élevé au moins par endroits sur la surface extérieure de l'élément de serrage (7) et/ou sur la surface, faisant face à l'élément de serrage (7), de l'évidement (9) cylindrique ou du piston.

11. Tête de trépied selon la revendication 10, **caractérisée en ce que** les dents (16') et les dents (16'') présentent respectivement sur la surface extérieure de l'élément de serrage (7) et sur la surface opposée de l'évidement (9) cylindrique ou du piston (8) un pas de denture différent.
